# EUROPEAN PATENT APPLICATION

(11) **EP 2 383 160 A1**
(43) Date of publication of application: **02.11.2011**
(21) Application number: 09834915.2
(22) Date of filing: 24.12.2009
(51) Int. Cl.: B60W 30/16, B60K 26/04, B60K 31/00, B60W 30/00, B60W 50/08, G08G 1/16

(54) **VEHICULAR DRIVE CONTROL DEVICE**

(30) Priority: 26.12.2008 JP 2008334623
(71) Applicant: Hitachi Automotive Systems, Ltd., Hitachinaka-shi Ibaraki 312-8502 (JP)
(72) Inventor: TAKAMI Tomoaki, Hitachinaka-shi Ibaraki 312-8503 (JP)
(74) Representative: MERH-IP Matias Erny Reichl Hoffmann
(86) International application number: PCT/JP2009/071387
(87) International publication number: WO 2010/074117

(57) **Abstract**

Disclosed is a vehicular drive control device that automatically starts follow-up control while a driver presses an accelerator pedal down, and when the driver further presses the accelerator pedal down, cancels the follow-up control. When a variation in manipulation of the accelerator pedal is kept within a predetermined range for predetermined time duration or longer, switchover is performed from normal control to follow-up control so as to start automatic control to keep a following distance with a leading vehicle at a predetermined distance. When the variation increases by a predetermined value or more, control mode is returned from follow-up control to normal control, and a manipulation reaction force is generated in accordance with an instruction value from the accelerator manipulation reaction force operation unit. When switchover is carried out from follow-up control to normal control, a torque instruction value from the follow-up control unit is switched to a torque instruction value from the normal control unit with a predetermined gradient.

## Description

### TECHNICAL FIELD

The present invention relates to a vehicular drive control device that controls a following distance between a vehicle with the vehicular drive control device and a leading vehicle.

### BACKGROUND ART

Conventionally, a device to keep an appropriate following distance with a leading vehicle is known as disclosed in Patent Document 1, for example, by measuring a following distance using a sensor such as a radar and when this following distance falls below a predetermined distance, increasing a reaction force of an accelerator pedal pressed down by a driver to call attention to the driver to release the accelerator pedal, and when the pedal is released, applying a brake automatically.

Patent Document 2 discloses a drive control device that, when a slow-running mode setting switch is switched ON, controls a vehicle to run slowly at a speed corresponding to the displacement of an accelerator pedal at that time so as to keep a following distance at a limit following distance or longer, and when the following distance falls below the limit following distance, applies a brake to stop the vehicle.

In the device described in Patent Document 1, however, a brake does not operate until the driver releases the accelerator pedal, and therefore every time the vehicle gets close to a leading vehicle, the driver has to take his foot off the accelerator pedal, and when accelerating the vehicle again, the driver has to press the accelerator pedal down. Such manipulation of the accelerator pedal requiring pressing down and taking off frequently will annoy drivers.

The device described in Patent Document 2 includes means that automatically increases and decreases the speed so as to keep a following distance in a slow-running mode, even when the driver is pressing down the accelerator pedal. However, in the case where the driver wants to cancel the slow-running mode temporarily to pass a leading vehicle, for example, the driver has to inform the device about his intention of accelerating for passing by switching a turn signal ON or by switching the slow-running mode setting switch OFF, and such operation prevents the vehicle from quickly shifting to the acceleration. When returning back to the slow-running mode, the driver has to switch the slow-running mode setting switch ON, and such manipulation is inconvenient for drivers.
Patent Document 1: JP-Patent Application Publication No. 2005-8147 A
Patent Document 2: JP-Patent Application Publication No. 2-128931 A (1990)

### DISCLOSURE OF THE INVENTION

### PROBLEM TO BE SOLVED BY THE INVENTION

In view of the above-stated problems of the conventional techniques, it is an object of the present invention to provide comfort and--safety driving with less manipulation burden on a driver.

A vehicular drive control device includes: an accelerator pedal that a driver manipulates; a sensor that detects a following distance with reference to a leading vehicle; a normal control unit that calculates a torque instruction value in accordance with a displacement of the accelerator pedal; a follow-up control unit that calculates a torque instruction value or a fluid pressure instruction value so as to keep the following distance constant; a determination unit that, when a variation in manipulation of the accelerator pedal is kept within a predetermined range for predetermined time duration or longer, instructs switchover from normal control to follow-up control, and when the variation increases by a predetermined value or more, instructs to return from follow-up control to normal control; a switchover unit that switches a torque instruction value to be output in accordance with an instruction from the determination unit; an accelerator manipulation reaction force operation unit that instructs a manipulation reaction force that is generated at the accelerator pedal; and a manipulation reaction force generation unit that generates a manipulation reaction force at the accelerator pedal in accordance with an instruction value from the accelerator manipulation reaction force operation unit.

In the present invention, when a displacement of an accelerator pedal pressed down by a driver is kept within a predetermined range for predetermined time duration or longer, follow-up control is automatically started to keep a predetermined following distance with a leading vehicle. When the driver further presses the accelerator pedal down so that the displacement increases by a predetermined value or more, it is determined that the driver wants to increase a speed, and the follow-up control is canceled.

### EFFECTS OF THE INVENTION

Automatic driving with enhanced convenience enabling comfort and safety driving of a vehicle can be achieved without requiring a driver to manipulate an accelerator pedal and switches of the vehicle frequently.

### BRIEF DESCRIPTION OF THE DRAWINGS

Fig. 1 shows the internal and the peripheral configuration of a controller of a vehicular drive control device.
Fig. 2 is a flowchart 1 showing the processing by the vehicular driver control device.
Fig. 3 is a flowchart 1 showing the processing by the vehicular driver control device more specifically.
Fig. 4 describes how to carry out switchover between normal control and follow-up control.
Fig. 5 describes the processing by a switchover unit.
Fig. 6 describes the processing by an accelerator manipulation reaction force operation unit.

### BEST MODE FOR CARRYING OUT THE INVENTION

The following describes embodiments that are best mode carrying out the invention, with reference to the drawings.

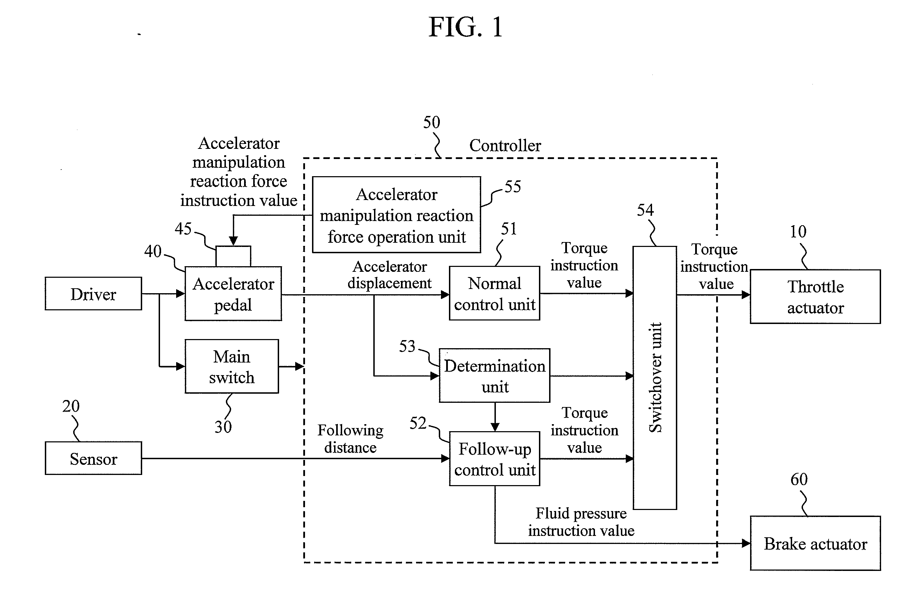

Fig. 1 shows the internal and the peripheral configuration of a controller of a vehicular drive control device.

A sensor 20 is to measure a following distance between a vehicle with the vehicular drive control device (hereinafter simply called a vehicle) and a leading vehicle, and a laser radar device or a millimeter-wave radar device, for example, is used for this purpose. A detected following distance is output to a controller 50.

A main switch 30 is manipulated by a driver for follow-up control by the vehicular drive control device. A signal from the main switch 30 is output to the controller 50.

An accelerator pedal 40 is manipulated by the driver, and the displacement thereof is output to the controller 50. An accelerator manipulation reaction force operation unit 55 of the controller 50 outputs an accelerator manipulation reaction force instruction value to a manipulation reaction force generation unit 45 of the accelerator pedal 40 to generate a reaction force to push the accelerator pedal up.

A throttle actuator 10 regulates a degree of opening of a throttle valve disposed in an engine intake pipe in accordance with a torque instruction value from the controller 50, so as to control an engine torque, i.e., a driving force of the vehicle.

A brake actuator 60 is provided with a negative-pressure booster, for example, and controls a braking force of the vehicle by regulating a brake fluid pressure in accordance with a fluid pressure instruction value from the controller 50.

The controller 50 includes a CPU and CPU peripheral components such as a ROM and a RAM, and controls the vehicular drive control device as a whole. The controller 50 includes a normal control unit 51, a follow-up control unit 52, a determination unit 53, a switchover unit 54 and the accelerator manipulation reaction force operation unit 55 implemented by a software configuration of the CPU.

The normal control unit 51 outputs a torque instruction value so that a driving force that the driver intends can be generated in the vehicle in accordance with the accelerator displacement.

The follow-up control unit 52 outputs a torque instruction value and a fluid pressure instruction value so as to keep a set and desired following distance.

The determination unit 53 determines, on the basis of the accelerator displacement, which one of the torque instruction value from the normal control unit 51 and the torque instruction vale from the follow-up control unit 52 is to be selected.

The switchover unit 54 carries out switchover by selecting any one of the torque instruction value from the normal control unit 51 and the torque instruction vale from the follow-up control unit 52 in accordance with a result of the determination by the determination unit 53, where the switchover is carried out with a predetermined gradient so that the torque instruction value does not change abruptly.

When the following distance falls below a predetermined distance while the driver presses the accelerator pedal 40 down, the accelerator manipulation reaction force operation unit 55 generates a reaction force to vibrate the accelerator pedal 40, thus calling attention to the driver to take his foot off the accelerator pedal 40.

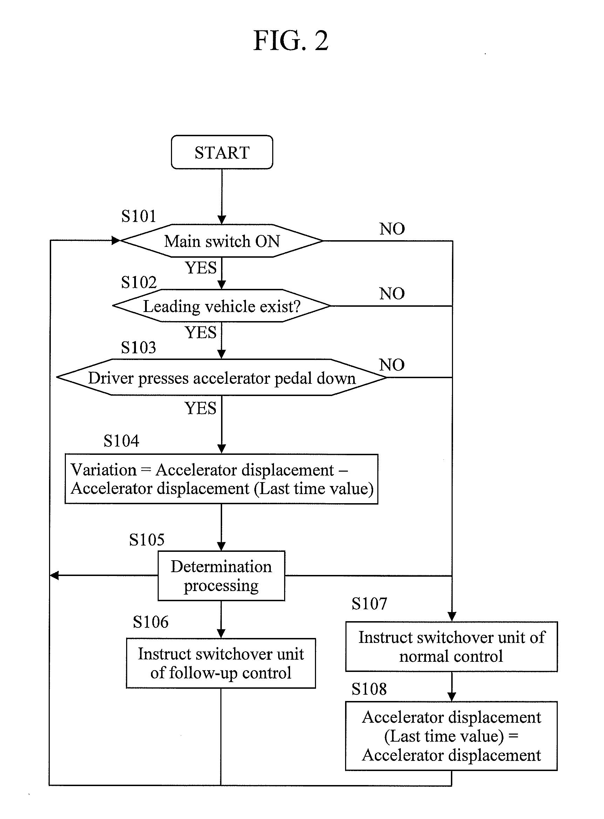

Fig. 2 is a flowchart showing the procedure of the present invention. The procedure shown in Fig. 2 is implemented by the controller 50 at a constant control cycle during running, e.g., at intervals of 0.01 second.

At Step S101, determination is made as to whether the main switch 30 is switched ON by the driver or not.

At Step S102, a following distance output from the sensor 20 is read, and determination is made as to whether any leading vehicle is positioned in a predetermined following distance or not.

At Step S103, determination is made as to whether the driver is pressing the accelerator pedal 40 down or not on the basis of the accelerator displacement.

When all of the conditions at Steps S101, S102 and S103 are satisfied (YES), the procedure proceeds to Step S104.

At Step S104, a variation is calculated between the accelerator displacement of the preceding control cycle (last time value) and the accelerator displacement this time. This variation becomes positive when the driver presses the accelerator pedal 40 down, and becomes negative when the driver eases up on the accelerator pedal 40.

At Step S105, determination is made, on the basis of the variation, as to to which one of normal control and follow-up control switchover is carried out, or whether or not to carry out switchover.

At Step S106, instruction is issued to the switchover unit 54 to carry out switchover to follow-up control.

At Step S107, instruction is issued to the switchover unit 54 to carry out switchover to normal control.

At Step S108, the accelerator displacement this time is stored in the RAM of the controller 50, and the stored displacement is referred to as the accelerator displacement (last time value) at Step S104 in the next control cycle.

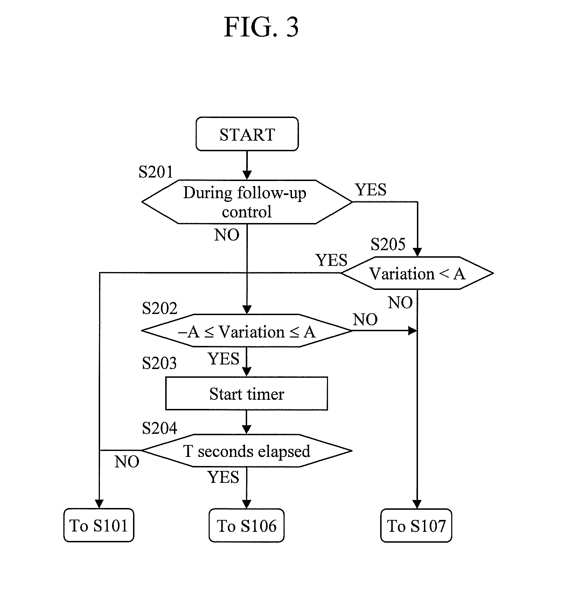

Fig. 3 is a more detailed flowchart for the determination processing at Step S105.

At Step S201, determination is made as to whether follow-up control or normal control is currently being carried out. In the case of during normal control, the procedure proceeds to Step S202, where determination is made whether or not to carry out follow-up control.

At Step S202, determination is made as to whether the variation calculated at Step S104 is of -A or more and less than A as a predetermined threshold condition or not. In the case of affirmative determination (YES), a timer is started at Step S203 to measure an elapsed time from the affirmative determination at Step S202.

At Step S204, determination is made as to whether the elapsed time exceeds predetermined T seconds or not, and in the case of exceeding, it is determined that the driver keeps the accelerator pedal 40 constant, and the procedure proceeds to Step S106, where the control mode is switched to follow-up control. Thusly, while the driver presses the accelerator pedal down, follow-up control is carried out to automatically increase or decrease the speed. Therefore automatic control is carried out so as to keep a predetermined following distance without requiring the driver to perform the manipulation of taking his foot off the accelerator pedal when the vehicle gets closer to the leading vehicle or to perform the manipulation of pressing the accelerator pedal down when the leading vehicle increases the speed, and so burden on the driver can be lessened.

In the case of negative determination (NO) at Step S202, it is determined that the driver performs the manipulation of pressing down or easing up on the accelerator pedal 40, the procedure proceeds to the Step S107 to continue normal control. At this time, the timer started at Step S203 is initialized so as to leave the timer ready for correct measurement of an elapsed time from affirmative determination at Step S202.

In the case of determination as during follow-up control (YES) at Step S201, the procedure proceeds to Step S205 to determine whether or not return to normal control.

At Step S205, in the case where the variation calculated at Step S104 exceeds A, it is determined that the driver presses the accelerator pedal 40 down, and the procedure proceeds to Step S107 to return to normal control. Accordingly, when the driver wants to increase the speed, the follow-up control can be canceled simply by further pressing the accelerator pedal down, thus enabling quick shift to acceleration control in accordance with the accelerator pedal displacement. At Step S205, except for the case where the calculated variation exceeds A, the procedure proceeds to Step S101 to continue follow-up control. In the case where after the procedure proceeds from Step S205 to Step S107 to return to normal control so as to increase the speed as the driver wants, when the driver keeps the accelerator pedal constant, the follow-up control is carried out again.

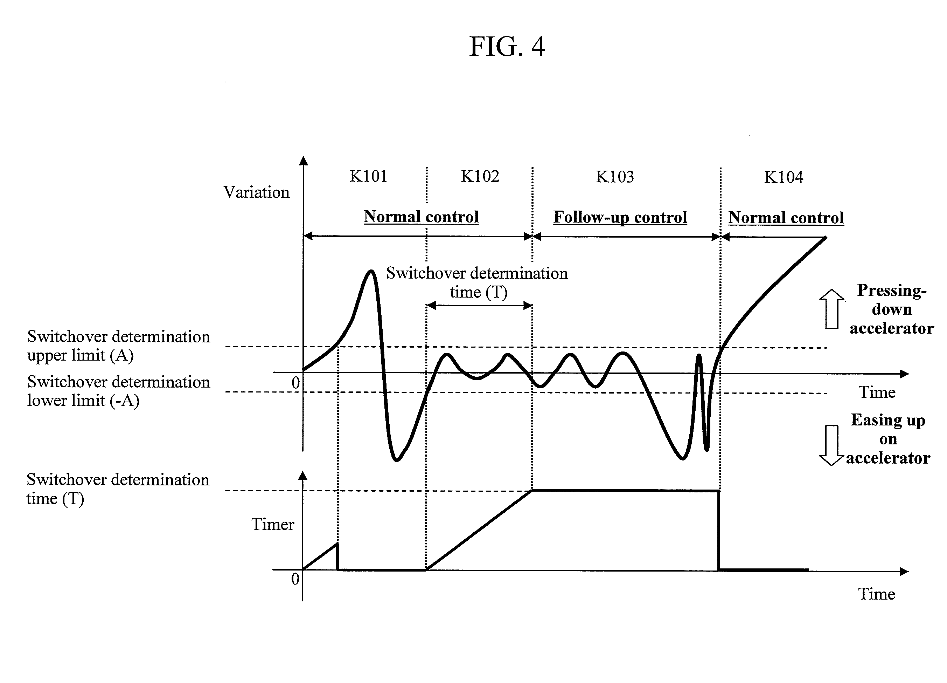

Fig. 4 shows a relationship between a change in the variation of the accelerator pedal, switchover of the control mode and the operation of the timer. Referring now to this drawing, the above-mentioned determination processing will be described below more specifically.

The upper graph in Fig. 4 shows the variation calculated at Step S104, where a positive value shows a state where the driver is pressing the accelerator pedal 40 down, and a negative value shows a state where the driver is easing up on the accelerator pedal 40.

The lower graph in Fig. 4 shows the state of the timer started at Step S203, where the timer counts up the time when the variation resides between the switchover determination upper limit A and the switchover determination lower limit -A.

While the driver repeats the manipulation of pressing down and easing up on the accelerator pedal 40, the timer does not exceed a switchover determination time T, and therefore normal control is selected, and the vehicle increases the speed in accordance with the displacement of the accelerator pedal 40 (this is the operation in the section K101).

When the switchover determination time T has elapsed in a state where the driver keeps the accelerator pedal 40 constant and the variation thereof resides within thresholds for switchover determination, the control mode is switched from normal control to follow-up control, and the following distance at the time of the switchover is set at a desired following distance to start follow-up control (this is the operation in the section K102).

During the follow-up control, increasing or decreasing the speed of the vehicle is automatically controlled so as to keep the desired following distance irrespective of the displacement of the accelerator pedal 40 by the driver. At this time, unless the driver further presses the accelerator pedal 40 down so that the variation exceeds the switchover determination upper limit A, the follow-up control is continued (this is the operation in the section K103).

In the case where the driver presses the 40 down to increase the speed of the vehicle so that the variation exceeds the switchover determination upper limit A, the control mode is returned to normal control, where the speed is increased in accordance with the accelerator displacement (this is the operation in the section K104).

The following describes the processing by the switchover unit 54.

When the determination unit 53 determines the switchover to follow-up control, the switchover unit 54 selects a torque instruction value output from the follow-up control unit 52, and outputs the torque instruction value to the throttle actuator 10. Conversely, when the determination unit 53 determines the switchover to normal control, a torque instruction value output from the normal control unit 51 is output to the throttle actuator 10. Further, in order to lessen the impact of the acceleration during switchover, the torque instruction value output from the switchover unit 54 is limited so as not to change in variation of a predetermined gradient X or larger.

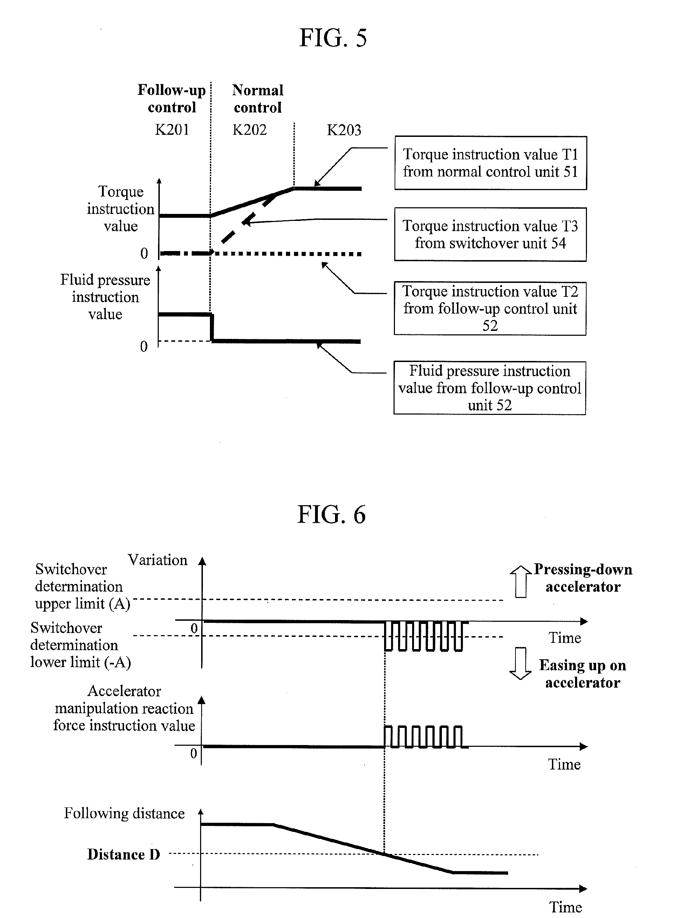

Fig. 5 describes a change in the torque instruction value and the fluid pressure instruction value in the above-mentioned operation that is an example where the control mode is switched from follow-up control to normal control. Letting herein that
T1: torque instruction value that is the output from the normal control unit 51;
T2: torque instruction value that is the output from the follow-up control unit 52;
T3: torque instruction value that is the output from the switchover unit 54; and
T3_Z1: torque instruction value that is the output from the switchover unit 54 (last time value),
Then, T3=T2 holds in the section K201,
T3=T3_Z1+X holds in the section K202, and
T3=T1 holds in the section K203.

When the control mode is switched from the deceleration state in follow-up control to normal control, a fluid pressure instruction value output from the follow-up control unit 52 may be set at a value that does not apply a brake to the vehicle, e.g., at substantially zero, so as not to disturb the acceleration intended by the driver.

Fig. 6 exemplifies the accelerator manipulation to describe the operation by the accelerator manipulation reaction force operation unit 55 included in the controller 50.

Irrespective of whether the control mode being normal control or follow-up control, when the following distance falls below a predetermined distance D, the accelerator manipulation reaction force operation unit 55 outputs an accelerator manipulation reaction force instruction value so that the accelerator pedal 40 vibrates to the easing-up direction as shown in Fig. 6. Thereby, as compared with the conventional technique that simply generates a reaction force to push the accelerator pedal 40 up, driver's attention can be called securely even when the driver presses the accelerator pedal 40 down with a part near the toe only or when the driver presses the accelerator pedal down lightly during low-speed running.

### DESCRIPTION OF REFERENCE NUMBERS

- 10: Throttle actuator
- 20: Sensor
- 30: Main switch
- 40: Accelerator pedal
- 50: Controller
- 51: Normal control unit
- 52: Follow-up control unit
- 53: Determination unit
- 54: Switchover unit
- 55: Accelerator manipulation reaction force operation unit
- 60: Brake actuator

## Claims

1. A vehicular drive control device, comprising:
an accelerator pedal that a driver manipulates;
a sensor that detects a following distance with reference to a leading vehicle;
a normal control unit that calculates a torque instruction value in accordance with a displacement of the accelerator pedal;
a follow-up control unit that calculates a torque instruction value or a fluid pressure instruction value so as to keep the following distance constant;
a determination unit that, when a variation in manipulation of the accelerator pedal is kept within a predetermined range for predetermined time duration or longer, instructs switchover from normal control to follow-up control, and when the variation increases by a predetermined value or more, instructs to return from follow-up control to normal control;
a switchover unit that switches a torque instruction value to be output in accordance with an instruction from the determination unit;
an accelerator manipulation reaction force operation unit that instructs a manipulation reaction force that is generated at the accelerator pedal; and
a manipulation reaction force generation unit that generates a manipulation reaction force at the accelerator pedal in accordance with an instruction value from the accelerator manipulation reaction force operation unit.

2. The vehicular drive control device according to claim 1, wherein the follow-up control unit calculates a torque instruction value or a fluid pressure instruction value so as to keep a following distance at a time when switchover is carried out from normal control to follow-up control, and outputs the torque instruction value or the fluid pressure instruction value.

3. The vehicular drive control device according to claim 1, wherein the switchover unit outputs a torque instruction value from the normal control unit during normal control, and outputs a torque instruction value from the follow-up control unit during follow-up control.

4. The vehicular drive control device according to claim 3, wherein when switchover is carried out from follow-up control to normal control, a torque instruction value from the follow-up control unit is switched to a torque instruction value from the normal control unit with a predetermined gradient.

5. The vehicular drive control device according to claim 2, wherein when switchover is performed from follow-up control to normal control, the follow-up control unit calculates a fluid pressure instruction value so as not to decrease a speed of a vehicle including the vehicular drive control device and outputs the fluid pressure instruction value.

6. The vehicular drive control device according to claim 1, wherein when a following distance with a leading vehicle falls below a predetermined distance in a follow-up control mode, the accelerator manipulation reaction force operation unit calculates an accelerator manipulation reaction force to vibrate the accelerator pedal and outputs the accelerator manipulation reaction force.
